# EUROPEAN PATENT APPLICATION

(11) **EP 4 811 256 A1**
(43) Date of publication of application: **23.09.2026**
(21) Application number: 24891497.0
(22) Date of filing: 15.11.2024
(51) Int. Cl.: G06Q 30/02, D05B 81/00

(54) **SEWING MACHINE MANAGEMENT SYSTEM AND SEWING MACHINE MANAGEMENT METHOD**

(30) Priority: 16.11.2023 JP 2023195115
(71) Applicant: JUKI Corporation, Tama-shi, Tokyo 206-8551 (JP)
(72) Inventor: ATSUMI Tadashi, Tama-shi, Tokyo 206-8551 (JP)
(74) Representative: Hoeger, Stellrecht & Partner Patentanwälte mbB
(86) International application number: PCT/JP2024/040614
(87) International publication number: WO 2025/105462

(57) **Abstract**

A sewing machine management system (1) includes a data acquisition unit (61) configured to acquire operation history data of a sewing machine (2); a processing unit (62) configured to calculate a handover price of the sewing machine (2) based on the operation history data; and an output unit (63) configured to cause an output device (4, 12) to output the handover price.

## Description

### TECHNICAL FIELD

The present disclosure relates to a sewing machine management system and a sewing machine management method.

### BACKGROUND ART

In a technical field related to a sewing machine management system, a sewing management system as disclosed in Patent Literature 1 is known.

### CITATION LIST

### PATENT LITERATURE

Patent Literature 1: JP2020-168056A

### SUMMARY OF INVENTION

### TECHNICAL PROBLEM

In a case where a business of providing sewing machines such as a lease business or a reuse business of a sewing machine is performed, when a handover price is inappropriate, at least one of a provider or a user may be disadvantaged.

An object of the present disclosure is to appropriately determine a handover price of a sewing machine.

### SOLUTION TO PROBLEM

A sewing machine management system according to the present disclosure includes a data acquisition unit configured to acquire operation history data of a sewing machine; a processing unit configured to calculate a handover price of the sewing machine based on the operation history data; and an output unit configured to cause an output device to output the handover price.

### ADVANTAGEOUS EFFECTS OF INVENTION

According to the sewing machine management system of the present disclosure, the handover price of the sewing machine is appropriately determined.

### BRIEF DESCRIPTION OF DRAWINGS

[Fig. 1] Fig. 1 is a diagram schematically showing a sewing machine management system according to an embodiment.
[Fig. 2] Fig. 2 is a hardware configuration diagram showing a management controller according to the embodiment.
[Fig. 3] Fig. 3 is a functional block diagram showing a management device and a sewing machine according to the embodiment.
[Fig. 4] Fig. 4 is a flowchart showing a sewing machine management method according to the embodiment.
[Fig. 5] Fig. 5 is a diagram illustrating processing of an output unit according to the embodiment.
[Fig. 6] Fig. 6 is a diagram illustrating the processing of the output unit according to the embodiment.

### DESCRIPTION OF EMBODIMENTS

Hereinafter, an embodiment according to the present disclosure will be described with reference to the drawings, but the scope of the present disclosure is not limited to the embodiment. The components of the embodiment described below can be appropriately combined. A part of the components may not be used.

### [Sewing Machine Management System]

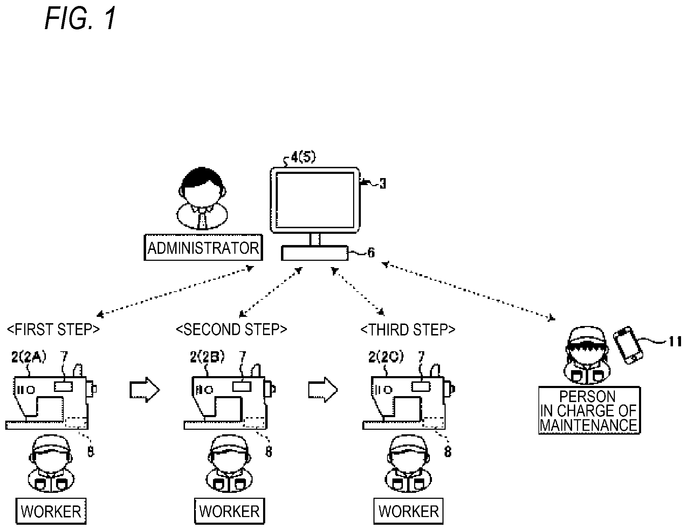

Fig. 1 is a diagram schematically showing a sewing machine management system 1 according to an embodiment. The sewing machine management system 1 includes a management device 3 that manages a production process of a sewn product. The production process includes sewing steps of sewing a sewing target using sewing machines 2. Each of the sewing machines 2 is an industrial sewing machine. The sewn product is produced in a production line including the sewing machines 2. A plurality of sewing machines 2 are installed in the production line. The production line is installed in a sewing factory. The sewing machines 2 operate in the sewing factory. The sewing target is sewn by the sewing machines 2 to produce the sewn product. In the embodiment, the management device 3 is installed in the sewing factory. The management device 3 may be installed outside the sewing factory.

In the sewing steps, the sewing target is sewn by the sewing machines 2 to produce the sewn product. Examples of the sewing target include fabric. Examples of the sewn product include clothes.

In the sewing factory, a plurality of types of sewing machines 2 corresponding to applications are installed. In the sewing factory, a plurality of types of sewing machines 2 are installed to correspond to a plurality of sewing steps for producing the sewn product. Examples of the type of the sewing machine 2 include a lockstitch sewing machine for sewing a body part, a button-attaching sewing machine for attaching a button to the body part, and a pocket-attaching sewing machine for attaching a pocket to the body part. In one sewing factory, many sewing machines 2 of various types are installed. In order to simplify the description, three sewing machines 2 are shown in Fig. 1. A first sewing machine 2A is used in a first step for producing the sewn product. A second sewing machine 2B is used in a second step for producing the sewn product. A third sewing machine 2C is used in a third step for producing the sewn product. In the sewing factory, a plurality of sewing machines 2 of one type may be installed.

The sewing factory employs an administrator, workers, and maintenance personnel. The administrator manages the workers, the person in charge of maintenance, and the sewing machines 2. The workers sew the sewing target using the sewing machines 2 in the sewing steps. The person in charge of maintenance performs maintenance on the sewing machines 2. Each of the administrator, the worker, and the person in charge of maintenance may be regarded as a user of the sewing machine 2. The number of administrators may be one or may be multiple. The number of workers may be multiple or may be one. For example, one worker may operate a plurality of sewing machines 2. The number of the person in charge of maintenance may be multiple or may be one.

The management device 3 includes a display device 4, an input device 5, and a management controller 6. The display device 4 displays display data. The display device 4 includes a flat panel display, such as a liquid crystal display or an organic EL display. The input device 5 is operated by the administrator to generate input data. The input device 5 may be operated by the worker or an operator. The input device 5 includes a touch panel (touch sensor) disposed on a display screen of the display device 4. The input device 5 may be a computer keyboard, a mouse, or a voice input device. The management controller 6 includes a computer system. The management controller 6 includes at least one processor and a main memory that stores a computer program executable by the processor.

Each of the sewing machines 2 includes an operation panel 7 and a sewing machine controller 8. The operation panel 7 is operated by the worker to generate operation data. The operation panel 7 includes a touch panel (touch sensor) disposed on a display screen of a display. The sewing machine controller 8 includes a computer system. The sewing machine controller 8 includes at least one processor and a main memory that stores a computer program executable by the processor.

The person in charge of maintenance performs maintenance on the sewing machines 2. The person in charge of maintenance possesses an information terminal 11. Examples of the information terminal 11 include a tablet terminal and a smartphone. The information terminal 11 includes a display, an input device such as a touch panel, and a computer system.

The management device 3 is shared by the plurality of sewing machines 2 and the information terminal 11 in the sewing factory. The number of management devices 3 is less than the number of sewing machines 2. The management device 3 can communicate with the sewing machines 2 and the information terminal 11. The management controller 6 of the management device 3 communicates with the sewing machine controller 8 of the sewing machine 2 and the information terminal 11. The management controller 6, the sewing machine controller 8, and the information terminal 11 wirelessly communicate with each other. The management controller 6, the sewing machine controller 8, and the information terminal 11 wirelessly communicate with each other via a local area network (LAN). Examples of the wireless LAN include Wi-Fi (registered trademark). The management controller 6, the sewing machine controller 8, and the information terminal 11 may wirelessly communicate with each other via a personal area network (PAN). Examples of the wireless PAN include Bluetooth (registered trademark).

The management controller 6 transmits a control command to the sewing machine controller 8 of the sewing machine 2 based on the input data generated by operating the input device 5.

The sewing machine controller 8 transmits the operation history data indicating an operation history of the sewing machine 2 to the management controller 6. The operation history of the sewing machine 2 includes at least one of an operation date and time of the sewing machine 2, an operation time of the sewing machine 2, a type of a sewing target sewn by the sewing machine 2, the number of stitches during the sewing, error information generated in the sewing machine 2, or the worker who operates the sewing machine 2. The operation time of the sewing machine 2 includes at least one of a continuous operation time of the sewing machine 2 or a cumulative operation time of the sewing machine 2.

The sewing machine 2 includes a needle bar, a thread take-up lever, and a sewing machine motor for operating the needle bar and the thread take-up lever. The operation history of the sewing machine 2 includes an operation history of the sewing machine motor. The sewing machine controller 8 inputs a control command to a sewing machine drive circuit that drives the sewing machine motor. The sewing machine drive circuit includes a switch element such as a field effect transistor (FET). The operation history data of the sewing machine 2 includes the control command transmitted from the sewing machine controller 8 to the sewing machine drive circuit. The control command includes at least one of a rotation speed command value for commanding a rotation speed of the sewing machine motor or a current command value for commanding a current value to be input to the sewing machine motor. The operation date and time of the sewing machine 2 include a date and time when the control command is transmitted from the sewing machine controller 8 to the sewing machine drive circuit. The operation time of the sewing machine 2 includes a time during which the control command is transmitted from the sewing machine controller 8 to the sewing machine drive circuit.

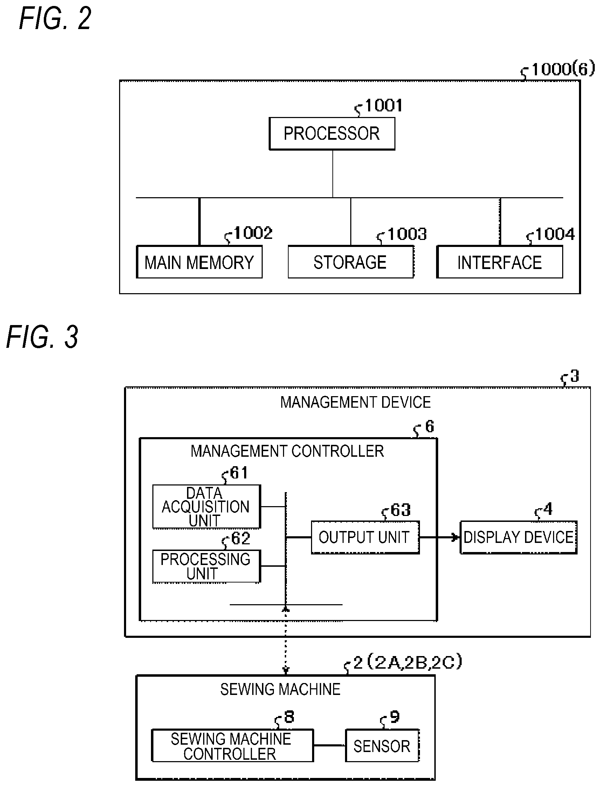

The operation history data of the sewing machine 2 may include detection data of a sensor 9 (refer to Fig. 3) provided in the sewing machine 2. The sensor 9 detects an operation condition of the sewing machine 2. Examples of the sensor 9 include a number-of-stitches sensor that detects the number of stitches during sewing, a tension sensor that detects a thread tension, and a pressing pressure sensor that detects a pressing pressure on the sewing target. The sewing machine controller 8 may transmit the detection data of the sensor 9 to the management controller 6 as the operation history data of the sewing machine 2.

Further, the sewing machine controller 8 transmits usage environment history data indicating a usage environment history of the sewing machine 2 to the management controller 6. The usage environment history of the sewing machine 2 includes one of an atmospheric temperature and a humidity of an environment in which the sewing machine 2 is used. When the sensor 9 provided in the sewing machine 2 is a temperature sensor, the sewing machine controller 8 can transmit the usage environment history data to the management controller 6 based on detection data of the temperature sensor. When the sensor 9 provided in the sewing machine 2 is a humidity sensor, the sewing machine controller 8 can transmit the usage environment history data to the management controller 6 based on detection data of the humidity sensor.

The information terminal 11 transmits maintenance history data indicating a maintenance history of the sewing machine 2 to the management controller 6. Maintenance of the sewing machine 2 includes at least one of inspection, adjustment, component replacement, or repair of the sewing machine 2. The maintenance history of the sewing machine 2 includes at least one of a maintenance date and time of the sewing machine 2, a maintenance method of the sewing machine 2, a maintenance location of the sewing machine 2, a maintenance result of the sewing machine 2, or a person in charge of maintenance who has maintained the sewing machine 2. The maintenance method includes at least one of inspection, adjustment, component replacement, or repair of the sewing machine 2. The maintenance location refers to a maintained portion of the sewing machine 2. The maintenance location includes a maintained component of the sewing machine 2. The maintenance result includes at least one of an inspection result, an adjustment result, a replaced component, or a repair result. The inspection result indicates a record of inspection on the sewing machine 2. The adjustment result indicates a state of the sewing machine 2 after the adjustment. The repair result indicates a state of the sewing machine 2 after the rapair. The person in charge of maintenance inputs, into the information terminal 11, maintenance data related to maintenance of the sewing machine 2 performed by the person in charge of maintenance. The information terminal 11 transmits the maintenance history data to the management controller 6 based on the maintenance data.

The management controller 6 collects the operation history data, the usage environment history data, and the maintenance history data of each of the plurality of sewing machines 2. The management controller 6 displays the operation history data, the usage environment history data, and the maintenance history data of each of the plurality of sewing machines 2 on the display device 4.

### [Computer System]

Fig. 2 is a hardware configuration diagram showing the management controller 6 according to the embodiment. The management controller 6 includes a computer system 1000. The computer system 1000 includes a processor 1001 such as a central processing unit (CPU), a main memory 1002 including a nonvolatile memory such as a read only memory (ROM) and a volatile memory such as a random access memory (RAM), a storage 1003, and an interface 1004 including an input/output circuit. A function of the management controller 6 is stored in the storage 1003 as a computer program. The processor 1001 reads the computer program from the storage 1003, loads the computer program into the main memory 1002, and executes processing according to the computer program. The computer program may be distributed to the computer system 1000 via a network.

Similarly, each of the sewing machine controller 8 and the information terminal 11 includes a computer system including a processor, a main memory, a storage, and an interface.

### [Management Device and Sewing Machine]

Fig. 3 is a functional block diagram showing the management device 3 and the sewing machine 2 according to the embodiment. As shown in Fig. 3, the sewing machine 2 includes the sewing machine controller 8 and a sensor 9.

The management controller 6 includes a data acquisition unit 61, a processing unit 62, and an output unit 63.

The data acquisition unit 61 acquires the operation history data of the sewing machine 2 from the sewing machine controller 8. The data acquisition unit 61 acquires the usage environment history data of the sewing machine 2 from the sewing machine controller 8. The data acquisition unit 61 acquires the maintenance history data of the sewing machine 2 from the information terminal 11.

The processing unit 62 calculates a handover price of the sewing machine 2 based on the operation history data acquired by the data acquisition unit 61. The processing unit 62 may calculate the handover price of the sewing machine 2 based on the operation history data and the usage environment history data acquired by the data acquisition unit 61. The processing unit 62 may calculate the handover price of the sewing machine 2 based on the operation history data and the maintenance history data acquired by the data acquisition unit 61. The processing unit 62 may calculate the handover price of the sewing machine 2 based on the operation history data, the usage environment history data, and the maintenance history data acquired by the data acquisition unit 61.

In the embodiment, the sewing machine 2 used in the sewing factory is leased or reused. In the embodiment, the handover price includes at least one of a lease price or a reuse price.

In the embodiment, correlation data indicating a relationship between the operation history data and the handover price is derived in advance and stored in the processing unit 62. The processing unit 62 can calculate the handover price based on the operation history data acquired by the data acquisition unit 61 and the correlation data derived in advance.

Further, correlation data indicating a relationship between the usage environment history data and the handover price is derived in advance and stored in the processing unit 62. The processing unit 62 can calculate the handover price based on the usage environment history data acquired by the data acquisition unit 61 and the correlation data derived in advance.

Further, correlation data indicating a relationship between the maintenance history data and the handover price is derived in advance and stored in the processing unit 62. The processing unit 62 can calculate the handover price based on the maintenance history data acquired by the data acquisition unit 61 and the correlation data derived in advance.

For example, when correlation data between the number of stitches (operation history data) and the handover price is derived in advance and the data acquisition unit 61 acquires the number of stitches detected by a sewing machine needle sensor as the operation history data, the processing unit 62 can determine the handover price based on the number of stitches acquired by the data acquisition unit 61 and the correlation data.

For example, when correlation data between the atmospheric temperature (usage environment history data) and the handover price is derived in advance and the data acquisition unit 61 acquires an atmospheric temperature detected by a temperature sensor as the usage environment history data, the processing unit 62 can determine the handover price based on the atmospheric temperature acquired by the data acquisition unit 61 and the correlation data.

For example, when correlation data between a maintenance frequency (maintenance history data) and the handover price is derived in advance and the data acquisition unit 61 acquires the maintenance frequency as the maintenance history data, the processing unit 62 can determine the handover price based on the maintenance frequency acquired by the data acquisition unit 61 and the correlation data.

The output unit 63 displays the handover price calculated by the processing unit 62 on the display of the display device 4. The display device 4 is an example of an output device that outputs the handover price calculated by the processing unit 62.

### [Sewing Machine Management Method]

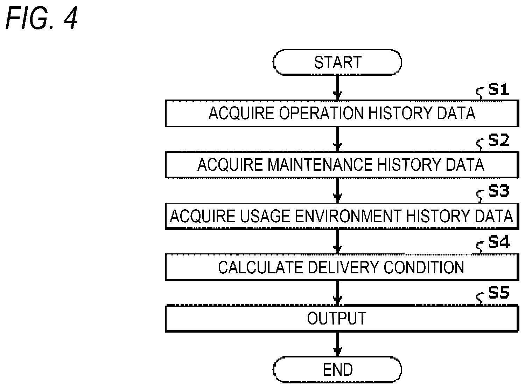

Fig. 4 is a flowchart showing a sewing machine management method according to the embodiment. The data acquisition unit 61 acquires the operation history data of the sewing machine 2 from the sewing machine controller 8 (step S1). The data acquisition unit 61 acquires the maintenance history data of the sewing machine 2 from the information terminal 11 (step S2). The data acquisition unit 61 acquires the usage environment history data of the sewing machine 2 from the sewing machine controller 8 (step S3).

The processing unit 62 calculates the handover price based on the operation history data, the maintenance history data, the usage environment history data, and the above correlation data (step S4).

The output unit 63 displays the handover price calculated by the processing unit 62 on the display device 4 (step S5).

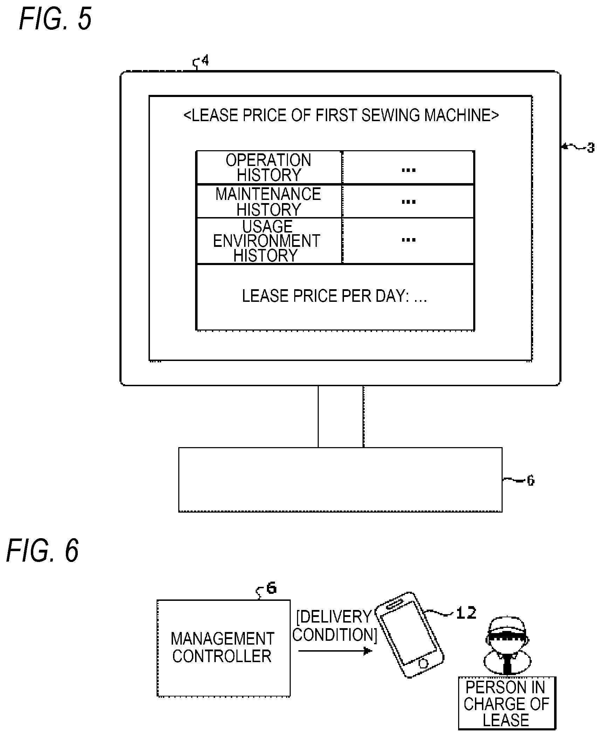

Fig. 5 is a diagram illustrating processing of the output unit 63 according to the embodiment. Fig. 5 shows an example in which a lease price when the first sewing machine 2A is leased is displayed on the display device 4 as a handover price of the first sewing machine 2A. As shown in Fig. 5, the output unit 63 displays, on the display device 4, the lease price when the first sewing machine 2A is leased on the display device 4. The output unit 63 may display an operation history, a maintenance history, and a usage environment history of the first sewing machine 2A on the display device 4. The output unit 63 may display the lease price (lease unit price) of the first sewing machine 2A per day on the display device 4.

Fig. 6 is a diagram illustrating the processing of the output unit 63 according to the embodiment. As shown in Fig. 6, the output unit 63 may transmit the lease price as the handover price to an information terminal 12 possessed by a person in charge of lease. The person in charge of lease can present the lease price to a user who desires to lease the sewing machine 2 based on the lease price displayed on a display of the information terminal 12.

### [Advantageous Effects]

As described above, according to the embodiment, the data acquisition unit 61 configured to acquire the operation history data of the sewing machine 2; the processing unit 62 configured to calculate the handover price of the sewing machine 2 based on the operation history data; and the output unit 63 configured to cause the display device 4 or the information terminal 12, which is an output device, to output the handover price are provided.

According to the embodiment, when the sewing machine 2 that is used is delivered to the user, the handover price of the sewing machine 2 is appropriately determined based on the operation history data. For the sewing machine 2 operated under severe operating conditions, a lower handover price is advantageous to the user. Meanwhile, when the sewing machine 2 operated under non-severe operating conditions is delivered to the user at a low price, it is disadvantageous to a provider. According to the embodiment, since an appropriate handover price of the sewing machine 2 is determined based on the operation history data, at least one of the provider or the user is less likely to be disadvantaged.

In the embodiment, the handover price of the sewing machine 2 is appropriately determined based on the usage environment history data. For the sewing machine 2 operated under a severe usage environment, a lower handover price is advantageous to the user. Meanwhile, when the sewing machine 2 operated under a non-severe usage environment is delivered to the user at a low price, it is disadvantageous to the provider. According to the embodiment, since an appropriate handover price of the sewing machine 2 is determined based on the usage environment history data, at least one of the provider or the user is less likely to be disadvantaged.

In the embodiment, the sewing machine 2 is appropriately maintained based on the maintenance history data. For example, for the sewing machine 2 having a low maintenance frequency, a lower handover price is advantageous to the user. Meanwhile, when the sewing machine 2, on which careful maintenance is performed at a high frequency, is delivered to the user at a low price, it is disadvantageous to the provider. According to the embodiment, since an appropriate handover price of the sewing machine 2 is determined based on the maintenance history data, at least one of the provider or the user is less likely to be disadvantaged.

The present disclosure includes the following aspects.
(1) A sewing machine management system including:
   a data acquisition unit configured to acquire operation history data of a sewing machine;
   a processing unit configured to calculate a handover price of the sewing machine based on the operation history data; and
   an output unit configured to cause an output device to output the handover price.
(2) The sewing machine management system according to (1), in which
   the handover price includes at least one of a lease price and a reuse price of the sewing machine.
(3) The sewing machine management system according to (1), in which
   the data acquisition unit acquires maintenance history data of the sewing machine, and
   the processing unit calculates the handover price based on the operation history data and the maintenance history data.
(4) The sewing machine management system according to (1), in which
   the data acquisition unit acquires usage environment history data of the sewing machine, and
   the processing unit calculates the handover price based on the operation history data and the usage environment history data.
(5) A sewing machine management method including:
   acquiring operation history data of a sewing machine;
   calculating a handover price of the sewing machine based on the operation history data; and
   causing an output device to output the handover price.

The present application is based on Japanese Patent Application No. 2023-195115 filed on November 16, 2023, the contents of which are incorporated herein by reference.

## Claims

1. A sewing machine management system comprising:
a data acquisition unit configured to acquire operation history data of a sewing machine;
a processing unit configured to calculate a handover price of the sewing machine based on the operation history data; and
an output unit configured to cause an output device to output the handover price.

2. The sewing machine management system according to claim 1, wherein
the handover price includes at least one of a lease price and a reuse price of the sewing machine.

3. The sewing machine management system according to claim 1, wherein
the data acquisition unit acquires maintenance history data of the sewing machine, and
the processing unit calculates the handover price based on the operation history data and the maintenance history data.

4. The sewing machine management system according to claim 1, wherein
the data acquisition unit acquires usage environment history data of the sewing machine, and
the processing unit calculates the handover price based on the operation history data and the usage environment history data.

5. A sewing machine management method comprising:
acquiring operation history data of a sewing machine;
calculating a handover price of the sewing machine based on the operation history data; and
causing an output device to output the handover price.
